# EUROPEAN PATENT APPLICATION

(11) **EP 3 313 019 A1**
(43) Date of publication of application: **25.04.2018**
(21) Application number: 16194753.6
(22) Date of filing: 20.10.2016
(51) Int. Cl.: H04L 9/08, H04L 9/00

(54) **METHOD FOR GENERATING A PAIR OF TERMINAL ASSOCIATED KEYS USING A TERMINAL AND A GATEWAY, A METHOD FOR SECURE DATE EXCHANGE USING THE METHOD, A TERMINAL AND A GATEWAY**

(71) Applicant: Dr. Max Iann Invest GmbH, 96148 Baunach (DE)
(72) Inventor: FAHRENKRUG, Jacob, 16761 Hennigsdorf (DE)
(74) Representative: Gulde & Partner

(57) **Abstract**

The invention is directed to a method for generating a pair of terminal associated keys comprising the steps of: providing (S100) on a gateway (10) a pair of gateway associated keys comprising a public gateway key (Pub-G) and a private gateway key (Pr-G), providing (S110) on a terminal (10) a terminal associated and symmetric first terminal key (T-1) and accessing the public gateway key (Pub-G) and generating (S120) a second terminal key (T-2) by encrypting the first terminal key (T-1) with the public gateway key (Pub-G) on the terminal (20). In a further step (S130), the second terminal key (T-2) is transferred from the terminal (20) to the gateway (10) and a pair of terminal associated keys comprising a public terminal key (Pub-T) and a private terminal key (Pr-T) on the gateway (10) are generated (S140). The invention further includes the steps of generating (S150) an encrypted private terminal key (ePr-T) by encrypting the private terminal key (Pr-T) with the first terminal key (T-1) on the gateway (10), transferring (S160) the public terminal key (Pub-T) and the encrypted private terminal key (ePr-T) to the terminal (20); and decrypting (S170) the encrypted private terminal key (ePr-T) with the first terminal key (T-1) and then with the public terminal key (Pub-T).

## Description

### FIELD OF INVENTION

The present invention relates generally to a method for generating a pair of terminal associated keys using a terminal and a gateway, a method for secure date exchange using the method for generating a pair of terminal associated keys using a terminal and a gateway. Further provided are a terminal and a gateway adapted to use the methods.

### BACKGROUND OF THE INVENTION

Digital rights management (DRM) is used widely to control the distribution of digital content on different platforms. Digital content can be digital audio, video, text multimedia or licenses to use digital media.

Current DRM systems have centralized vulnerability of key management. If content is required to be available on different devices, it has to be agreed on the lowest common denominator in the key management. This means that safety keys need to be stored on possibly insecure storage means.

### SUMMARY OF THE INVENTION

In accordance with one aspect of the present invention there is provided a method for generating a pair of terminal associated keys comprising the steps of providing on a gateway a pair of gateway associated keys comprising a public gateway key Pub-G and a private gateway key Pr-G and providing on a terminal a terminal associated first terminal key and accessing the public gateway key. Further provided are the steps of generating a second terminal key T-2 by encrypting the first terminal key T-1 with the public gateway key Pub-G on the terminal and transferring the second terminal key from the terminal to the gateway. Then, a pair of terminal associated keys comprising a public terminal key Pub-T and a private terminal key Pr-T are generated on the gateway (10), followed by generating an encrypted private terminal key ePr-T by encrypting the private terminal key Pr-T with the first terminal key T-1 on the gateway and transferring the public terminal key Pub-T and the encrypted private terminal key ePr-T to the terminal, and decrypting the encrypted private terminal key ePr-T with the first terminal key T-1 and then with the public terminal key Pub-T.

Thus, the invention solves the problem of key management by introducing unique key pairs which advantageously can be assigned to a specific user. Every household or every user can be permanently assigned to a gateway. A gateway gives content providers the possibility to tie specific content to a unique user ID. This user ID is the public part of a pair of keys, preferably asymmetric keys. This bond can be carried out also by means of verifiable and secure cryptography.

Preferably, the gateway comprises a trusted platform module and the method further comprises the step of storing the pair of gateway keys Pub-G, Pr-G and the pair of terminal keys Pub-T, Pr-T in the trusted platform module.

Thus, every household or every user can be permanently assigned to a trusted platform module (TPM). TMP is an international standard for a secure cryptoprocessor, which is a dedicated microprocessor designed to secure hardware by integrating cryptographic keys into devices. The provision of a TPM for every user gives content providers the opportunity to use a TPM without the presence of a TPM on all playback platforms itself. In other words, a device with a TPM gives content providers the possibility to tie specific content to a unique user ID. In addition, content providers can store sensitive information such as license keys, authentication keys securely in the TPM which are only loaded into a volatile memory when needed. Thus, by providing a TPM a secure place for the storage of the keys in a household is provided.

The first terminal key T-1 is preferably a symmetric key.

The method may further comprise the step of establishing a data connection between the gateway and the terminal. The data connection is preferably a wireless connection, a USB connection or a LAN connection.

The method may further comprise the step of dividing the private terminal key Pr-T into two parts Pr-T1 and Pr-T2, wherein the step of generating an encrypted private terminal key ePr-T comprises encryption of the second part Pr-T2 of the private terminal key Pr-T, and only the encrypted second part is transferred the terminal while the first part Pr-T1 remains on the gateway.

Further provided is a secure date transfer method between a gateway and a terminal comprising the steps of: generating a pair of terminal associated keys Pub-T, Pr-T according to the inventive method for generating a pair of terminal associated keys, encrypting on the gateway content with a symmetric content key C-1 and generating an encrypted content key eC-1 by encrypting the symmetric content key C-1 with the public terminal key Pub-T, transferring the encrypted content and the encrypted content key eC-1 to the terminal; and decrypting the encrypted content key eC-1 with the private terminal key Pr-T and decrypting the encrypted content with content key C-1.

The content may be anything provided in digital form and may comprise at least one of data or a licence.

Further provided is a gateway for generating a pair of keys associated together with a remote terminal, the gateway comprises: a gateway communication unit configured to establish a communication channel with a remote terminal to receive a second terminal key from a terminal; a gateway key generation unit configured to generate a pair of gateway associated keys comprising a public gateway key Pub-G and a private gateway key Pr-G, and a pair of terminal associated keys comprising a public terminal key Pub-T and a private terminal key Pr-T; and a gateway computing unit configured for generating an encrypted private terminal key ePr-T by encrypting the private terminal key Pr-T with the first terminal key T-1. The gateway communication unit is further configured for transferring the public terminal key Pub-T and the encrypted private terminal key ePr-T to the remote terminal.

The invention solves the problem of key management by introducing unique key pairs for each user on a gateway.

The gateway preferably comprises a trusted platform module adapted to store the public gateway key Pub-G, the private gateway key Pr-G, the public terminal key Pub-T and the private terminal key Pr-T.

Further provided is a terminal for generating a pair of terminal associated keys together with a gateway, the terminal comprising a terminal communication unit configured to establish a communication channel with a remote gateway and adapted for accessing a public gateway key Pub-G from the gateway. Further provided is a terminal key generation unit adapted to generate a terminal associated first terminal key T-1, a terminal computing unit adapted to generate a second terminal key T-2 by encrypting the first terminal key T-1 with the public gateway key Pub-G, wherein the terminal communication unit is configured to transfer the generated second terminal key T-2 to the remote gateway and is configured to receive a public terminal key Pub-T and an encrypted private terminal key ePr-T from the gateway. The terminal computing unit is adapted to decrypt the encrypted private terminal key ePr-T with the first terminal key T-1 and then the public terminal key Pub-T.

According to another aspect of the invention, a system for generating a pair of encryption keys comprising a terminal and a gateway according to the invention is provided.

The characteristics, features and advantages of this invention and the manner in which they are obtained as described above, will become more apparent and be more clearly understood in connection with the following description of exemplary embodiments, which are explained with reference to the accompanying drawings.

### BRIEF DESCRIPTION OF THE DRAWINGS

In the drawings, same element numbers indicate same elements in each of the views:
- Figure 1: is a schematic illustration of the method for generating a pair of terminal associated keys;
- Figure 2: is a schematic illustration of a secure date transfer method between a gateway and a terminal;
- Figure 3: is a schematic illustration of a gateway according to the invention;
- Figure 4: is a schematic illustration of a terminal according to the invention; and
- Figure 5: is a schematic illustration of a system for key generation according to the invention.

### DESCRIPTION OF THE PREFERRED EMBODIMENTS

In a preferred embodiment, the invention will be described with reference to a license management system, which complies with digital rights management standards like OMA DRM 2.0. The first step of granting licenses and encryption of digital content is to provide for each user on a gateway a pair of user specific gateway keys (private / public key). The private part is then stored on the gateway and the public gateway key is published. Licenses can now be encrypted by suppliers of digital content with the public gateway key and only be decrypted with the private gateway key on the gateway and are thus personalized. Content can be encrypted with a symmetric key; this is then encrypted with the public gateway key of the user. The encrypted content and the encrypted key are then transferred to the gateway. The symmetric key is decrypted with the private key and the content can then be decrypted.

This procedure is safe and is a reasonable alternative to conventional remote key management techniques. However, the decryption needs to take place on the gateway. In the following, it will be described how to allow the granting of licenses for different terminals and to solve the problem of mobile consumption of protected digital content.

To generate terminal-specific keys and to associate these with a user, software clients on any terminal generate a symmetric key and encrypt it with the public gateway key. The encrypted key is transmitted to the gateway and the gateway generates a new key pair for the terminal, and encrypts the private key with a symmetric key. The public key is then published. The encrypted private key can now be securely transmitted to the terminal and be provided with a specific lifetime. The content will be re-encrypted with a symmetric key and the symmetric key is encrypted with the device-specific public key. Subsequently, the content and encrypted key can be transferred to the terminal, which may be a mobile terminal.

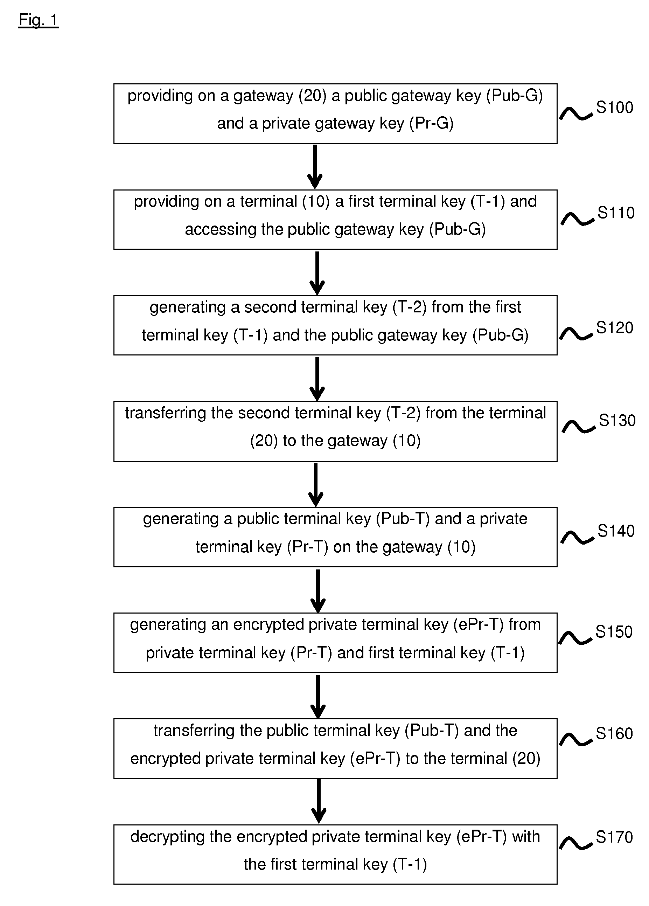

Figure 1 shows a schematic illustration of the method for generating a pair of terminal associated keys. In the first step, in step S100, a pair of gateway associated keys comprising a public gateway key Pub-G and a private gateway key Pr-G are provided on a gateway. In the next step, step S 110, a terminal associated first terminal key T-1 is provided on a terminal and the public gateway key Pub-G is accessed. The terminal is preferably a remote terminal, i.e. a terminal at a remote location from the gateway. The terminal may be a mobile terminal. This is followed by generating a second terminal key T-2 by encrypting the first terminal key T-1 with the public gateway key Pub-G on the terminal 20 in step S120. The second terminal key T-2 is then transferred from the terminal 20 to the gateway 10 (step S130). Subsequently, a pair of terminal associated keys comprising a public terminal key Pub-T and a private terminal key Pr-T are generated on the gateway 10 (step S140). In step S150, an encrypted private terminal key ePr-T is generated by encrypting the private terminal key Pr-T with the first terminal key T-1 on the gateway 10. The public terminal key Pub-T and the encrypted private terminal key ePr-T are then transferred to the terminal 20 in step S160. In the final step S170, the encrypted private terminal key ePr-T is decrypted first with the first terminal key T-1 and then the result is decrypted with the public terminal key Pub-T.

Thus, the inventive method allows generating user specific and also terminal specific keys for content encryption.

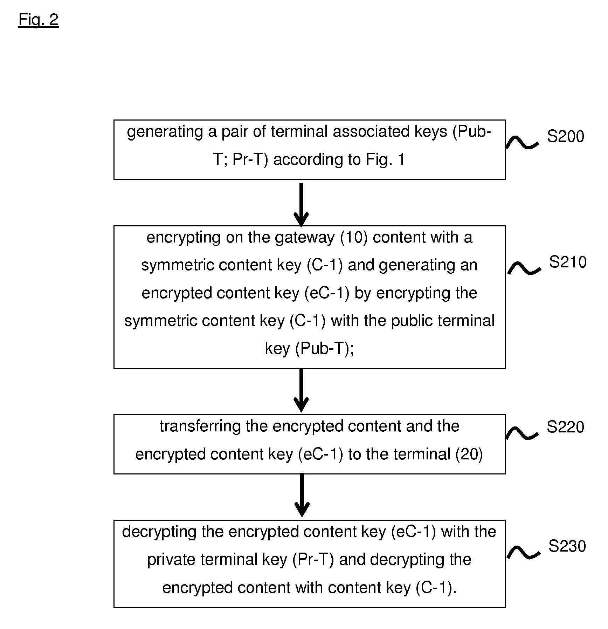

The content encryption will be described with reference to Figure 2, which illustrates the inventive secure date transfer method between a gateway 10 and a terminal 20. In a first step S200, a pair of terminal associated keys Pub-T, Pr-T according to the above inventive method of generating terminal specific keys as described with reference to Figure 1 are generated. In step S210, content is encrypted on the gateway 10 with a symmetric content key C-1 and an encrypted content key eC-1 is generated by encrypting the symmetric content key C-1 with the public terminal key Pub-T. Content may be anything provided in digital form, like data, licences etc. In step S220, the encrypted content and the encrypted content key eC-1 are transferred to the terminal 20. In the final step S230, the encrypted content key eC-1 is decrypted with the private terminal key Pr-T and the encrypted content is decrypted with content key C-1.

This approach solves the problems associated with the current digital rights management standard for mobile devices Open Mobile Alliance Digital Rights Management (OMA DRM 2.0). With OMA DRM 2.0, the certificates must be produced by the manufacturer of the device or terminal. If the terminal was cracked by Hackers, the keys are entered on a central list and are no longer available for the playing of digital content. This, however, can make the device unusable for the user.

In the inventive solution, the client software can easily generate a new key pair, newly encrypt then and discard the old keys. Another positive side effect is the possibility to replace keys, if they no longer meet the cryptographic requirements. To increase security, the private key of the terminals may be divided into two parts. One part of the key remains on the gateway and the other portion is sent to the terminal.

In order not to have the gateway online all the time, messages between the terminal and the gateway may be exchanged to wake up the gateway if its participation is required.

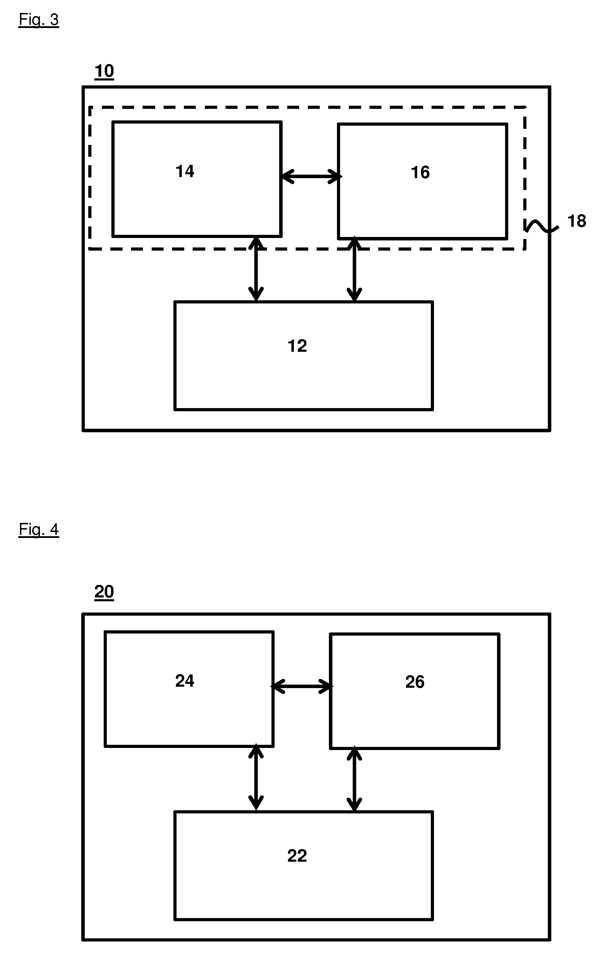

Figure 3 shows an inventive gateway 10 for generating a pair of keys associated with a remote terminal 20. The gateway 10 comprises a gateway communication unit 12, a gateway key generation unit 14 and a gateway computing unit 16. The gateway key generation unit 14 and the gateway computing unit 16 may form part of a trusted platform module 18. The gateway key generation unit 14 is configured to communicate, preferably bi-directionally with the gateway computing unit 16. Also, the gateway communication unit 12 can communicate with the gateway key generation unit 14 and the gateway computing unit 16. The gateway communication unit is configured to establish a communication channel with a remote terminal 20 to receive a second terminal key T-2 from a terminal 20. The gateway key generation unit 14 is adapted to generate a pair of gateway associated keys comprising a public gateway key Pub-G and a private gateway key Pr-G, and a pair of terminal associated keys comprising a public terminal key Pub-T and a private terminal key Pr-T. The gateway computing unit 16 is configured to generate an encrypted private terminal key ePr-T by encrypting the private terminal key Pr-T with the first terminal key T-1. The gateway communication unit 12 is further adapted for transferring the public terminal key Pub-T and the encrypted private terminal key ePr-T to the remote terminal 20.

Figure 4 shows terminal 20 for generating a pair of terminal associated keys in conjunction with a gateway 10. The terminal 20 comprises a terminal communication unit 22, a terminal key generation unit 24, and a terminal computing unit 26. Each element of the terminal 20 is configured to communication with one another. The terminal communication unit 22 is adapted for establishing a communication channel with a remote gateway 10 and adapted for accessing a public gateway key Pub-G from the gateway 10. The terminal key generation unit 24 adapted to generate a terminal associated first terminal key T-1. The terminal computing unit 26 is adapted to generate a second terminal key T-2 by encrypting the first terminal key T-1 with the public gateway key Pub-G. According to the invention, the terminal communication unit 22 is adapted for transferring the generated second terminal key T-2 to the remote gateway 10 and is adapted for receiving a public terminal key Pub-T and an encrypted private terminal key ePr-T from the gateway 10, and the terminal computing unit 26 is adapted to decrypt the encrypted private terminal key ePr-T with the first terminal key T-1 and then the public terminal key Pub-T.

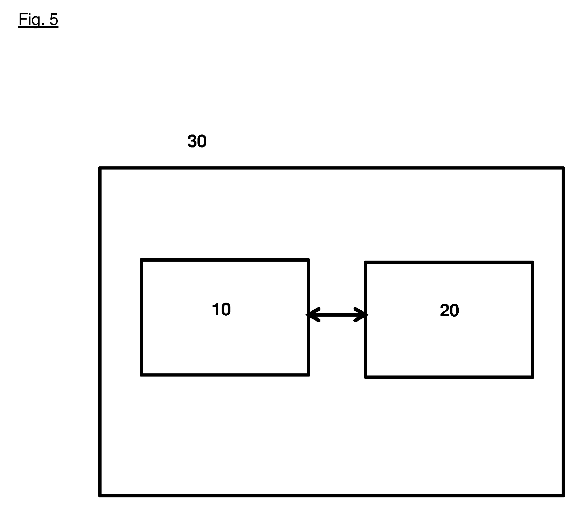

Figure 5 shows an inventive key generation and secure data transfer system 30 comprising an inventive gateway 10 and a terminal 20, which are adapted to communicate with each other. The communication may include wakeup-calls send from the terminal or the gateway.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

### LIST OF REFERENCE SIGNS

- 10: gateway
- 12: gateway communication unit
- 14: gateway key generation unit
- 16: gateway computing unit
- 18: gateway trusted platform module

- 20: terminal
- 22: terminal communication unit
- 24: terminal key generation unit
- 26: terminal computing unit

- 30: system

- Pr-G: private gateway key
- Pub-G: public gateway key
- Pr-T: private terminal key Pr-T1 first part of private terminal key Pr-T2 second part of private terminal key
- Pub-T: public gateway key
- T-1: first terminal key
- T-2: second terminal key
- ePr-T: encrypted private terminal key
- C-1: content key
- eC-1: encrypted content key

## Claims

1. Method for generating a pair of terminal associated keys comprising the steps of:
providing (S100) on a gateway (10) a pair of gateway associated keys comprising a public gateway key (Pub-G) and a private gateway key (Pr-G);
providing (S110) on a terminal (10) a terminal associated first terminal key (T-1) and accessing the public gateway key (Pub-G);
generating (S120) a second terminal key (T-2) by encrypting the first terminal key (T-1) with the public gateway key (Pub-G) on the terminal (20);
transferring (S130) the second terminal key (T-2) from the terminal (20) to the gateway (10);
generating (S140) a pair of terminal associated keys comprising a public terminal key (Pub-T) and a private terminal key (Pr-T) on the gateway (10);
generating (S150) an encrypted private terminal key (ePr-T) by encrypting the private terminal key (Pr-T) with the first terminal key (T-1) on the gateway (10);
transferring (S160) the public terminal key (Pub-T) and the encrypted private terminal key (ePr-T) to the terminal (20); and
decrypting (S170) the encrypted private terminal key (ePr-T) with the first terminal key (T-1) and then with the public terminal key (Pub-T).

2. The method according to claim 1, wherein the gateway comprises a trusted platform module (18) and the method further comprises the step of storing the pair of gateway keys (Pub-G, Pr-G) and the pair of terminal keys (Pub-T, Pr-T) in the trusted platform module (18).

3. The method according to claim 1 or 2, wherein the first terminal key (T-1) is a symmetric key.

4. The method according to claim 1 or 2, further comprising the step of establishing a data connection between the gateway (10) and the terminal (20).

5. The method according to claim 4, wherein the data connection is a wireless connection, a USB connection or a LAN connection.

6. The method according to any of the previous claims, further comprises the step of dividing the private terminal key (Pr-T) into two parts (Pr-T1, Pr-T2), wherein the step of generating (S150) an encrypted private terminal key (ePr-T) comprises encryption of the second part (Pr-T2) of the private terminal key (Pr-T), and only the encrypted second part is transferred the terminal (20) while the first part (Pr-T1) remains on the gateway (10).

7. Secure date transfer method between a gateway (10) and a terminal (20) comprising the steps of:
generating (200) a pair of terminal associated keys (Pub-T, Pr-T) according to a method as claimed in any of claims 1 to 6;
encrypting (S210) on the gateway (10) content with a symmetric content key (C-1) and generating an encrypted content key (eC-1) by encrypting the symmetric content key (C-1) with the public terminal key (Pub-T);
transferring (S220) the encrypted content and the encrypted content key (eC-1) to the terminal (20); and
decrypting (S230) the encrypted content key (eC-1) with the private terminal key (Pr-T) and decrypting the encrypted content with content key (C-1).

8. The method of claim 7, wherein content comprises at least one of data or a licence.

9. Gateway (10) for generating a pair of keys together with a remote terminal (20), the gateway (10) comprises:
a gateway communication unit (12) configured to establish a communication channel with a remote terminal (20) to receive a second terminal key (T-2) from a terminal (20);
a gateway key generation unit (14) configured to generate a pair of gateway associated keys comprising a public gateway key (Pub-G) and a private gateway key (Pr-G), and a pair of terminal associated keys comprising a public terminal key (Pub-T) and a private terminal key (Pr-T); and
a gateway computing unit (16) configured to generate an encrypted private terminal key (ePr-T) by encrypting the private terminal key (Pr-T) with the first terminal key (T-1);
wherein
the gateway communication unit (12) is further configured to transfer the public terminal key (Pub-T) and the encrypted private terminal key (ePr-T) to the remote terminal (20).

10. The gateway (10) of claim 9, wherein the gateway (10) comprises a trusted platform module (18) adapted to store the public gateway key (Pub-G), the a private gateway key (Pr-G), the public terminal key (Pub-T) and the private terminal key (Pr-T).

11. A terminal (20) for generating a pair of terminal associated keys together with a gateway (10), the terminal (20) comprising:
a terminal communication unit (22) configured to establish a communication channel with a remote gateway (10) and configured to access a public gateway key (Pub-G) from the gateway (10);
a terminal key generation unit (24) configured to generate a terminal associated first terminal key (T-1);
a terminal computing unit (26) configured to generate a second terminal key (T-2) by encrypting the first terminal key (T-1) with the public gateway key (Pub-G);
wherein
the terminal communication unit (22) is configured to transfer the generated second terminal key (T-2) to the remote gateway (10) and is configured to receive a public terminal key (Pub-T) and an encrypted private terminal key (ePr-T) from the gateway (10); and
the terminal computing unit (26) is configured to decrypt the encrypted private terminal key (ePr-T) with the first terminal key (T-1) and then the public terminal key (Pub-T).

12. System for generating a pair of encryption keys comprising a terminal (20) according to claim 11 and a gateway (10) according to claims 9 or 10.
